# EUROPÄISCHE PATENTANMELDUNG

(11) **EP 0 642 908 A1**
(43) Veröffentlichungstag der Anmeldung: **15.03.1995**
(21) Anmeldenummer: 94112277.2
(22) Anmeldetag: 05.08.1994
(51) Int. Cl.: B29C 45/14

(54) **Verfahren und Werkzeug zum Herstellen von Kunststoffteilen**

(30) Priorität: 07.08.1993 DE 4326626
(71) Anmelder: ROBERT BOSCH GMBH, 70442 Stuttgart (DE)
(72) Erfinder: Brueckner, Martin, D-71282 Hemmingen (DE)

(57) **Zusammenfassung**

Die Erfindung betrifft ein Verfahren und ein Werkzeug zum Herstellen von Kunststoffteilen, die mindestens einen Kunststoffkörper und ein Folienteil (38,50,74) aufweisen, wobei in einem Werkzeug der Kunststoffkörper an das Folienteil (38,50,74) angeformt wird. Es wird vorgeschlagen, daß die Folie (34) in das Werkzeug (13,24) eingelegt und das Folienteil (38,50,74) mit einem Schneidstempel (28,44,68) einer Stanzvorrichtung (24) ausgestanzt und der Kunststoffkörper im gleichen Werkzeug (13,24) an das Folienteil (38,50,74) angeformt wird. Das Werkzeug zur Durchführung des Verfahrens ist demgemäß so ausgestaltet, daß das durch die Stanzvorrichtung (24) ausgestanzte Folienteil (38,50,74) mittels der Stanzvorrichtung (24) in die Spritzvorrichtung (13) einlegbar ist. Dadurch werden die Handlingkosten, die durch das Einlegen der Folienteile (38,50,74) entstehen, reduziert und falsches Einlegen vermieden.

## Beschreibung

### Stand der Technik

Die Erfindung betrifft ein Verfahren und ein Werkzeug zum Herstellen von Kunststoffteilen, die mindestens einen Kunststoffkörper und ein Folienteil aufweisen. Bei dem bekannten Verfahren (DE 40 06 649 C1) wird die bedruckte, einlagige oder auch mehrlagige Folie in das Werkzeug eingelegt und anschließend mit Kunststoff hinterspritzt. Dies setzt jedoch voraus, daß die eingelegte Folie bereits ausgestanzt ist und die richtige Größe aufweist. Das Folienteil muß paßgenau von Hand in die Kavität eingelegt werden, was zu Verwechslungs- und Positionierfehlern führen kann. Ferner ist es bekannt ("Dekorieren von Spritzgußteilen im Werkzeug" von M. Böcklein und H. Eckert, Zeitschrift "Kunststoffe" 76 (1986) 11, Seite 1028 ff.) zum Dekorieren von Formteilen eine das Dekor enthaltende Folie mittels eines Folienvorschubgerätes in das geöffnete Werkzeug einzuführen, das Werkzeug zu schließen und die Kavität mit plastifiziertem Kunststoff zu füllen, wobei der Kunststoff die Folie an die Kavitätwand preßt und das auf der Folie aufgebrachte Dekor an seiner Oberfläche annimmt. Nach dem Erkalten des Kunststoffs wird das Werkzeug geöffnet, das Kunststoffteil ausgestoßen und die noch ganze Folie mittels des Folienvorschubgeräts bis zum nächsten Dekorstreifen weiterbefördert. Die Folie wird dabei nicht zum Bestandteil des Kunststoffteils und muß folglich auch nicht ausgestanzt werden.

### Vorteile der Erfindung

Das erfindungsgemäße Verfahren mit den Merkmalen des Hauptanspruchs hat den Vorteil, daß in einem Werkzeug sowohl das Ausstanzen des Folienteils als auch das Anformen des Kunststoffkörpers erfolgt, wobei das ausgestanzte Folienteil direkt nach dem Ausstanzen in das Spritzgießwerkzeug eingebracht wird. Dadurch werden, trotz einer Erhöhung der Positioniergenauigkeit, die Handlingskosten erheblich reduziert und Ausschuß aufgrund falsch eingelegter Teile gänzlich vermieden. Mit diesem Verfahren lassen sich alle Folienmaterialien bearbeiten, die sich stanzen lassen, wie zum Beispiel Kunststoffe, Aluminium, Kupfer Messing, Stahl, usw.

Besonders vorteilhaft ist es, wenn der Schneidstempel selbst das Folienteil in eine den Kunststoffkörper abbildende Kavität einschiebt. Der Schneidstempel kann dabei einen Teil der Kavität bilden. Ferner kann der Schneidstempel teilweise zurückgezogen und der sich bildende Hohlraum mit Kunststoff gefüllt werden. Dadurch wird erreicht, daß das Folienteil fest im später erkalteten Kunststoff verankert ist. Mit diesem Verfahren können auch mehrere Kunststoffteile gleichzeitig bearbeitet werden, wobei die Kunststoffteile jeweils ein oder mehrere Folienteile aufweisen können.

In einfacher Weise kann das Verfahren mittels eines Werkzeugs durchgeführt werden, das eine Stanzvorrichtung zum Ausstanzen eines Folienteils aus einer Folie und eine Spritzgießvorrichtung zum Um- oder Hinterspritzen des Folienteils aufweist, wobei das ausgestanzte Folienteil mittels der Stanzvorrichtung in die Spritzgießvorrichtung einlegbar ist. Das Werkzeug weist dabei einen kompakten Aufbau auf und wird im Verhältnis zu getrennt hergestellten Spritzgießwerkzeugen und Stanzwerkzeugen nur unwesentlich teurer. Die Anforderung an die erhöhte Präzision aufgrund des Zusammenwirkens der einzelnen Werkzeugteile verteuern diesbezüglich zwar das Gesamtwerkzeug, jedoch können einzelne Bauteile, wie Führungen oder Aufspannplatten, eingespart werden.

Weist das Werkzeug Durchbrüche auf, so können die Folienteile direkt von der Stanzvorrichtung in die Spritzgießvorrichtung eingelegt werden. Dabei ist es besonders vorteilhaft, wenn der Schneidstempel der Stanzvorrichtung nach dem Einlegen des Folienteils in die Spritzgießvorrichtung einen Teil der Kavität bildet. Diese Maßnahme vereinfacht das Werkzeug und erhöht die Fertigungstaktrate.

Der Schneidstempel kann mehrteilig ausgebildet sein, wobei die Einzelteile gegeneinander beweglich sein können, so daß ein Teil des Schneidstempels nach dem Einlegen des Folienteils zurückgezogen und der entstehende Hohlraum mit Kunststoff ausgefüllt werden kann.

### Zeichnung

In der Zeichnung sind drei Ausführungsbeispiele dargestellt und in der nachfolgenden Beschreibung näher erläutert. Es zeigen jeweils im Schnitt die Figuren 1 und 2 ein Werkzeug gemäß dem ersten Ausführungsbeispiel geöffnet und geschlossen, die Figuren 3 und 4 ein Teil eines Werkzeuges gemäß dem zweiten Ausführungsbeispiel geöffnet und geschlossen, und die Figuren 5 und 6 ein Teil eines Werkzeuges gemäß dem dritten Ausführungsbeispiel, ebenfalls geöffnet und geschlossen.

### Beschreibung der Ausführungsbeispiele

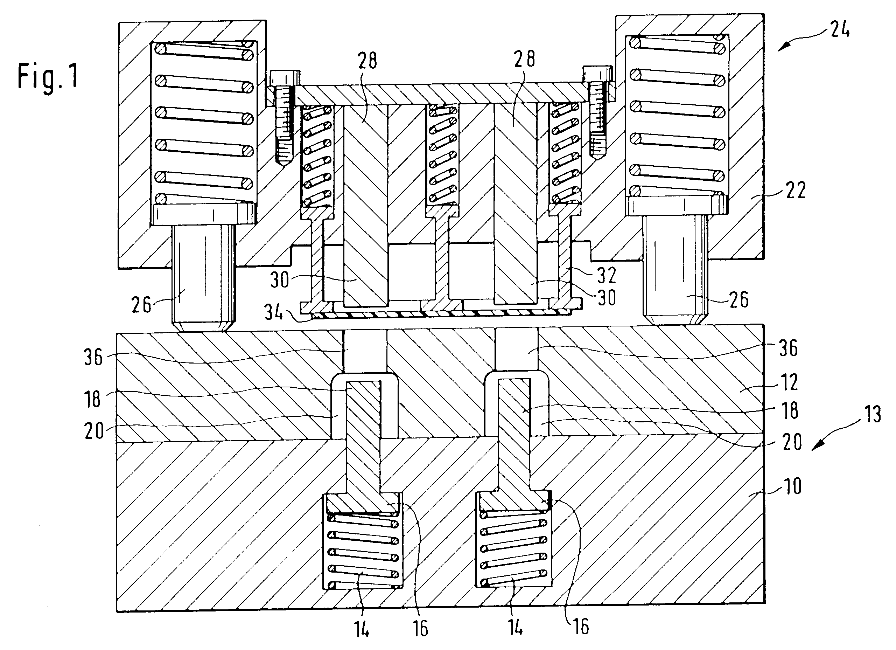

In Figur 1 ist vereinfacht ein Spritzgießwerkzeug mit den Grundplatten 10 und 12 ohne die geläufigen Details wie Angußkanäle, Auswerfer usw. dargestellt. Die Grundplatte 10 enthält zwei, jeweils mittels einer Feder 14 vorgespannte Schieber 16, deren äußere Enden 18 in die Kavitäten 20 der Grundplatte 12 reichen.

Im Anschluß an die Grundplatte 12 der Spritzgießvorrichtung 13 befindet sich eine Grundplatte 22 einer Stanzvorrichtung 24, die in teilgeöffnetem Zustand des Gesamtwerkzeugs mittels federbelasteter Bolzen 26 gehalten ist, wobei teilgeöffnet bedeutet, daß die Spritzgießvorrichtung 13 geschlossen und die Stanzvorrichtung 24 geöffnet ist.

In der Grundplatte 22 sind Schneidstempel 28 eingelassen, deren äußere Enden 30 in Richtung der Kavitäten 20 weisen. Ferner nimmt die Grundplatte 22 einen federbelasteten Folienhalter 32 auf.

In diesem teilgeöffneten Zustand kann eine Folie 34 senkrecht zur Zeichenebene bewegt werden, wobei die Vorschubseinheit für diese Bewegung nicht dargestellt ist.

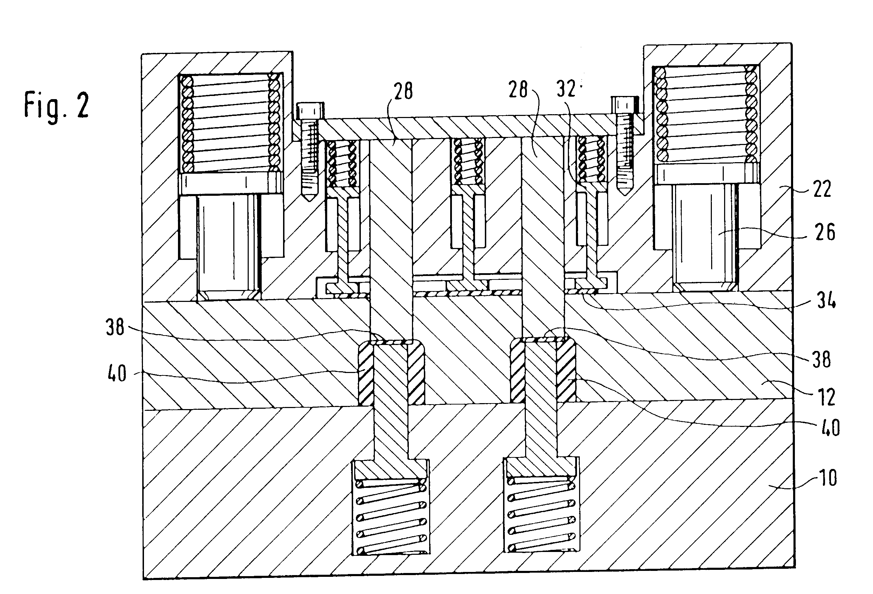

Im geschlossenen Zustand, gemäß Figur 2, drückt der Folienhalter 32 die Folie 34 auf die Grundplatte 12 und sind die Schneidstempel 28 durch die Folie 34 und durch Durchbrüche 36 in der Grundplatte 12 bis in die Kavitäten 20 eingefahren. An den Enden 30 der Schneidstempel 28 liegt jeweils ein ausgestanztes Folienstück 38 an, das vom eingespritzten Kunststoff 40 umfaßt ist.

Ein typischer Arbeitsvorgang läuft wie folgt ab:
Ausgehend vom komplett geöffneten Werkzeug wird zuerst die Spritzgießvorrichtung 13 geschlossen und die Stanzvorrichtung 24 aufgrund der federbelasteten Bolzen 26 noch geöffnet gehalten. Die Folie 34 wird durch den nicht dargestellten Folienvorschub so positioniert, daß die auszustanzenden Bereiche unter den Schneidstempeln 30 zu liegen kommen.

Die Platten 22 und 12 bewegen sich aufeinander zu, wobei der Folienhalter 32 die Folie auf die Grundplatte 12 unverrückbar festpreßt und die Schneidstempel 30 die Folienteile 38 ausstanzen und durch die Durchbrüche 36 in die Kavitäten 20 schieben.

Die Folienteile 38 werden zwischen den Schneidstempeln 28 und den federbelasteten Schiebern 16 arretiert, plastifizierter Kunststoff in die Kavität eingespritzt und der Kunststoffkörper angeformt.

Nach dem Erkalten des Kunststoffs öffnet sich das gesamte Werkzeug und die Kunststoffteile werden durch nicht dargestellte Auswerfer ausgeworfen.

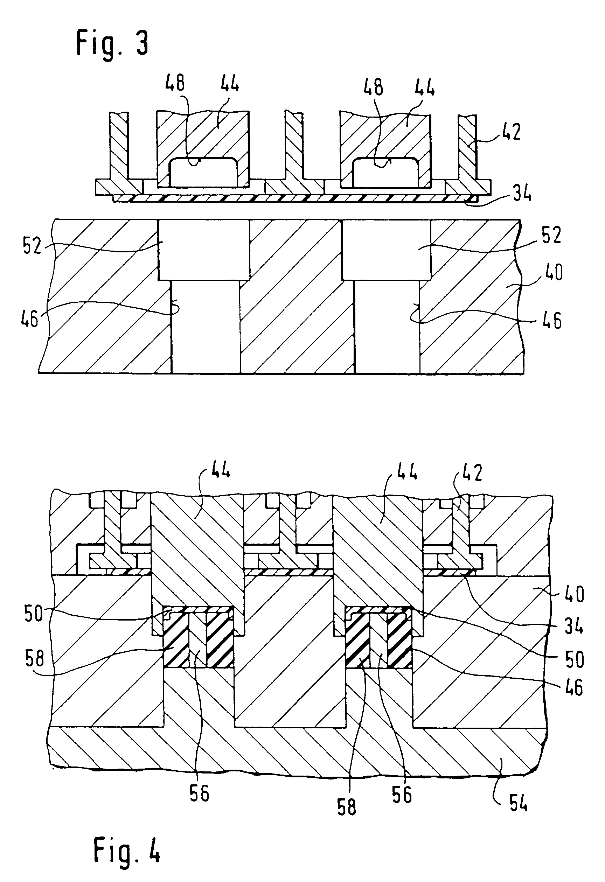

In Figur 3 ist teilweise eine Grundplatte 40 sowie Folienhalter 42 und Schneidstempel 44 eines Werkzeugs gemäß dem zweiten Ausführungsbeispiel gezeigt.

In Figur 4 ist das gesamte Werkzeug geschlossen, die Folienhalter 42 auf die Folie 34 aufgepreßt und die Schneidstempel 44 in die Grundplatte 40 bis in die Kavität 46 eingefahren.

Die Schneidstempel 44 weisen eine Innenkontur 48 auf, die im Zusammengefahrenen Werkzeugzustand einen Teil der Kavität 46 bilden.

Beim Zusammenfahren des Gesamtwerkzeugs stanzen die Schneidstempel 44 Folienteile 50 aus der festgehaltenen Folie 34 aus und schieben diese in die Kavität 46 durch Durchbrüche 52 in der Grundplatte 40. Die Kavitäten 46 sind ferner durch an einer weiteren Platte 54 angebrachte Stempel 56 verschlossen, die bis in die Kavitäten 46 reichen und die die Folienteile 50 gegen die Innenkontur 48 der Schneidstempel 44 drücken. In diesem Zustand können die Kunststoffkörper 58 an die Folienteile 50 durch Einspritzen von plastifiziertem Kunststoff angeformt werden.

Durch Öffnen der Form werden die fertigen Kunststoffstücke ausgestoßen.

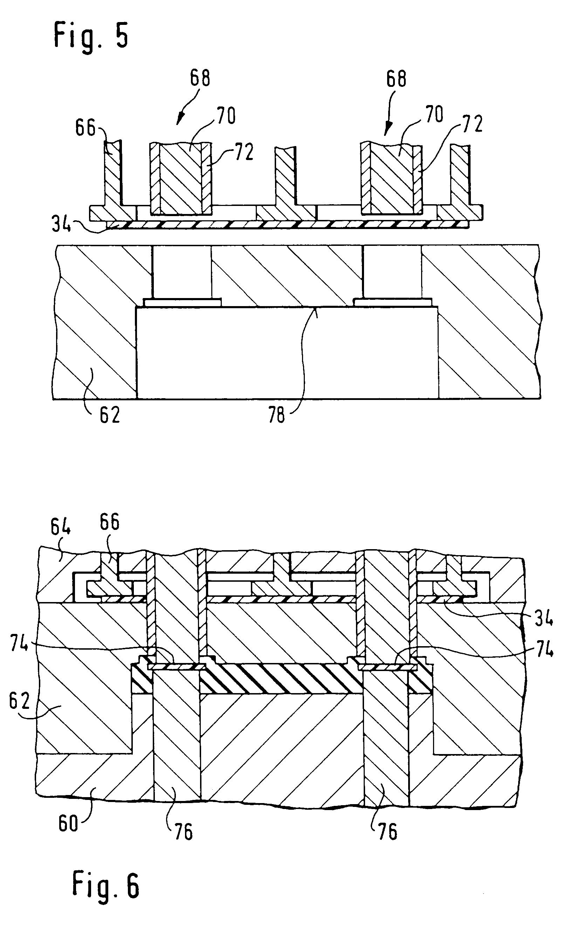

In den Figuren 5 und 6 ist gemäß dem dritten Ausführungsbeispiel ein Werkzeug teilweise dargestellt mit Grundplatten 60 und 62 für die Spritzgießvorrichtung und einer weiteren Grundplatte 64 sowie Folienhalter 66 für die Stanzvorrichtung. Die Schneidstempel 68 weisen einen Kern 70 sowie eine Hülse 72 auf.

Beim Zusammenfahren des gesamten Werkzeugs schneiden die Hülsen 72 Folienstücke 74 aus der festgehaltenen Folie 34 aus und führen diese in die durch die Grundplatten 60, 62 sowie Stempeln 76 gebildete Kavität 78 ein. Die Folienstücke 74 sind zwischen den Kernen 70 und den Stempeln 76 festgehalten. Bevor der plastifizierte Kunststoff eingespritzt wird, werden die Hülsen 72 ein Stück weit zurückgezogen, so daß beim Auffüllen der Kavität der plastifizierte Kunststoff auch das Folienstück umschließt und nach dem Erkalten fest im Kunststoffteil verankert.

Bei den dargestellten Werkzeugen hält grundsätzlich ein Stempel die Folienteile in den Kavitäten in Position. Nach dem Auswerfen des Kunststoffteils ist somit ein Hohlraum hinter der Folie vorhanden. Dies ist vorteilhaft bei bedruckten Kunststoffolien, die zum Beispiel bei Durchscheinenden Anzeigetafeln oder von hinten beleuchteten Tasten eingesetzt werden. Es ist jedoch auch möglich, die Folienteile beispielsweise durch Zurückziehen des Stempels während des Spritzgießvorganges vollständig zu hinterspritzen. Ferner ist es denkbar, die Folienstücke mittels eines erzeugten Unterdrucks an einem bestimmten Ort zu fixieren.

Als Folien können sämtliche stanzbaren Materialien verwendet werden, beispielsweise Kunststoffe oder Metalle.

## Patentansprüche

1. Verfahren zum Herstellen von Kunststoffteilen, die mindestens einen Kunststoffkörper und ein Folienteil aufweisen, wobei in einem Werkzeug der Kunststoffkörper an das Folienteil angeformt wird, dadurch gekennzeichnet, daß eine Folie (34) in das Werkzeug (13, 24) eingelegt, das Folienteil (34, 50, 74) mit einem Schneidstempel (28, 44, 68) einer Stanzvorrichtung (24) aus der Folie ausgestanzt und der Kunststoffkörper im gleichen Werkzeug (13, 24) an das Folienteil (34, 50, 74) angeformt wird.

2. Verfahren nach Anspruch 1, dadurch gekennzeichnet, daß der Schneidstempel (28, 44, 68) das Folienteil (34, 50, 74) in eine den Kunststoffkörper abbildende Kavität (20, 46, 78) einschiebt.

3. Verfahren nach Anspruch 2, dadurch gekennzeichnet, daß der Schneidstempel (28, 44, 68) einen Teil der Kavität (70, 46, 78) bildet.

4. Verfahren nach Anspruch 1, dadurch gekennzeichnet, daß der Schneidstempel (68) teilweise zurückgezogen und der sich bildende Hohlraum mit Kunststoff gefüllt wird.

5. Verfahren nach Anspruch 1, dadurch gekennzeichnet, daß mehrere Kunststoffteile und/oder Folienteile (34, 50, 74) gleichzeitig bearbeitet werden.

6. Werkzeug zur Durchführung des Verfahrens nach einem der vorhergehenden Ansprüche mit einer Stanzvorrichtung (24) zum Ausstanzen eines Folienteils (34, 50, 74) aus einer Folie (34) und einer Spritzgießvorrichtung (13) zum Um- oder Hinterspritzen des Folienteils (34, 50, 74), wobei das ausgestanzte Folienteil (34, 50, 74) mittels der Stanzvorrichtung (24) in die Spritzvorrichtung (13) einlegbar ist.

7. Werkzeug nach Anspruch 6, dadurch gekennzeichnet, daß zwischen Stanzvorrichtung (24) und Spritzgießvorrichtung (13) Durchbrüche (36, 52) zum Durchführen der Folienteile (34, 50, 74) vorgesehen sind.

8. Werkzeug nach Anspruch 6, dadurch gekennzeichnet, daß die Stanzvorrichtung (24) mindestens einen Schneidstempel (28, 44, 68) aufweist, der Teil einer in der Spritzgießvorrichtung (13) gebildeten Kavität (20, 46, 78) ist.

9. Werkzeug nach Anspruch 6, dadurch gekennzeichnet, daß der Schneidstempel (68) mehrteilig ausgebildet ist und die Einzelteile (70, 72) zumindest teilweise gegeneinander beweglich sind.

10. Werkzeug nach Anspruch 6, dadurch gekennzeichnet, daß die Stanzvorrichtung (24) die Folie haltende Mittel (32, 42, 66) aufweist.
